(19) Europäisches Patentamt
European Patent Office
Office européen des brevets

(11) **EP 1 765 005 B1**

(12) **EUROPEAN PATENT SPECIFICATION**

(45) Date of publication and mention
of the grant of the patent:
**23.02.2011 Bulletin 2011/08**

(51) Int Cl.:
***H04N 5/232*** *(2006.01)*

(21) Application number: **06254731.0**

(22) Date of filing: **11.09.2006**

(54) **Imaging method and imaging apparatus**

Bildgebungsverfahren und Bildgebungsvorrichtung

Procédé et apareil d'imagerie

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.09.2005 JP 2005269632**

(43) Date of publication of application:
**21.03.2007 Bulletin 2007/12**

(73) Proprietor: **Sony Corporation**
**Tokyo 141 (JP)**

(72) Inventors:
• **Nomura, Hirofumi**
**c/o Sony Corporation**
**Tokyo 141 (JP)**
• **Kumaki, Jinyo**
**c/o Sony Corporation**
**Tokyo 141 (JP)**

• **Shimada, Junji**
**c/o Sony Corporation**
**Tokyo 141 (JP)**
• **Nishi, Nobuo**
**c/o Sony Corporation**
**Tokyo 141 (JP)**
• **Meng, Long**
**c/o Sony Corporation**
**Tokyo 141 (JP)**

(74) Representative: **Mills, Julia**
**D Young & Co LLP**
**120 Holborn**
**London EC1N 2DY (GB)**

(56) References cited:
**EP-A- 0 458 249    WO-A-03/073750**
**US-A- 4 064 530    US-A- 5 748 231**

**Description**

The present invention contains subject matter related to Japanese Patent Application JP 2005-269632 filed in the Japanese Patent Office on SEPTEMBER 16, 2005.

The present invention relates to the field of an imaging method and an imaging apparatus preferred embodiments of which allow a still image, a moving picture, and the like to be obtained in high quality.

Since the small amount of an incident light from the object in low light intensity condition decreases the stored amount of electric charge of an imaging apparatus, a random noise component such as shot noise contained in a signal which is output as a captured signal from an image sensor relatively increases. As a result, the S/N ratio of the captured signal deteriorates. When the image sensor is exposed for a long time, the stored amount of electric charge increases and the random noise component relatively decreases. Thus, the S/N ratio of the captured signal may improve. However, if the image sensor is exposed for a long time, since the imaging apparatus may be shaken by the hand of the user, a blur may take place in the captured image (hereinafter this blur is sometimes referred to as an exposure blur). Thus, in the related art, it was necessary to fix the imaging apparatus with a tripod or the like.

To address the foregoing problem, a related art reference has been disclosed as Japanese Patent Application Laid-Open No. 9-261526. In this related art reference, images of an object are consecutively captured at a shutter speed, for example, 1/30 seconds which nearly prevents them from having an exposure blur, and the plurality of captured images are compensated for shaking and the compensated images are combined. The shaking takes place at intervals of an exposure period, for example, one field or one frame. Another related art reference has been disclosed as Japanese Patent Application Laid-Open No. 11-75105. In this related art reference, the entire exposure period is divided into a plurality of exposure segments, images obtained in the exposure segments are compensated for shaking, and the compensated images are combined. As a result, a high quality image can be obtained.

As described in those related art references, a plurality of images which have been compensated for shaking are simply combined. Thus, the memory capacity increases as the number of images to be combined increases. Thus, the number of images which can be combined is restricted depending on the storage capacity of the memory. As a result, as a problem of those related art references, the S/N ratio of a final image may not be sufficiently improved. In addition, if an image contains an unnecessary moving object or the contrast of an image is low, the accuracy of a moving vector with which an image is compensated for shaking becomes low. As a result, the image quality may not be sufficiently improved.

In view of the foregoing, it would be desirable to provide an imaging method and an imaging apparatus which allow an image to be captured in high quality without shaking even in low light intensity condition.

US 5,748,231 describes an adaptive motion vector decision method and device for digital image stabilizer system.

WO 03/073750 A1 describes noise filtering in images.

Various respective aspects and features of the invention are defined in the appended claims. Features from the dependent claims may be combined with features of the independent claims as appropriate and not merely as explicitly set out in the claims.

According to an embodiment of the present invention, there is provided an imaging method. A plurality of images which chronologically differ are captured. Motion of the plurality of images is detected and motion information is generated. Reliability of the motion information is determined. Shaking which takes place among the plurality of images is compensated corresponding to the motion information. An image which has been compensated for shaking is filtered by a recursive filter. A filter coefficient of the filter process is varied corresponding to the reliability of the motion information.

According to an embodiment of the present invention, there is provided an imaging apparatus. The imaging apparatus includes an image capturing section, a motion detecting section, a reliability determining section, a shaking compensating section, and a filtering section. The image capturing section captures a plurality of images which chronologically differ. The motion detecting section detects motion of the plurality of images and generating motion information. The reliability determining section determines reliability of the motion information. The shaking compensating section compensates shaking which takes place among the plurality of images corresponding to the motion information. The filtering section filters an image which has been compensated for shaking by using a recursive filter. A filter coefficient of the filtering section is varied corresponding to the reliability of the motion information.

According to embodiments of the present invention, images are consecutively captured in a storage time which prevents or at least impedes them from having an exposure blur even in low light intensity condition. In this condition, a plurality of images are captured and compensated for shaking. As a result, an image which is free from shaking is generated. In addition, the shaking-free image is processed by a recursive filter. Thus, an image having a high S/N ratio can be generated. Since the recursive filter operates in the time direction, images can be captured for a long time without a restriction of the number of images unlike the method of simply combining images. According to embodiments of the present invention, since the reliability of a moving vector deteriorate with a low contrast image and an unnecessary moving object in a captured image, filter coefficients are controlled depending on the reliability. As a result, an image quality can be improved.

The invention will now be described by way of example with reference to the accompanying drawings, throughout which like parts are referred to by like references, and in which:

Fig. 1 is a block diagram showing the overall structure according to an embodiment of the present invention;

Fig. 2 is a block diagram showing an example of a shaking detecting section according to the embodiment of the present invention;

Fig. 3 is a schematic diagram describing motion detection according to the embodiment of the present invention;

Fig. 4 is a schematic diagram showing the three-dimensional relationship of evaluation values and deviations when a moving vector is detected;

Fig. 5 is a schematic diagram showing the two-dimensional relationship of evaluation values and deviations when a moving vector is detected;

Fig. 6 is a block diagram showing an example of a filter according to the embodiment of the present invention;

Fig. 7 is a flow chart showing a process according to the embodiment of the present invention;

Fig. 8 is a schematic diagram describing a reliability determination process according to the embodiment of the present invention;

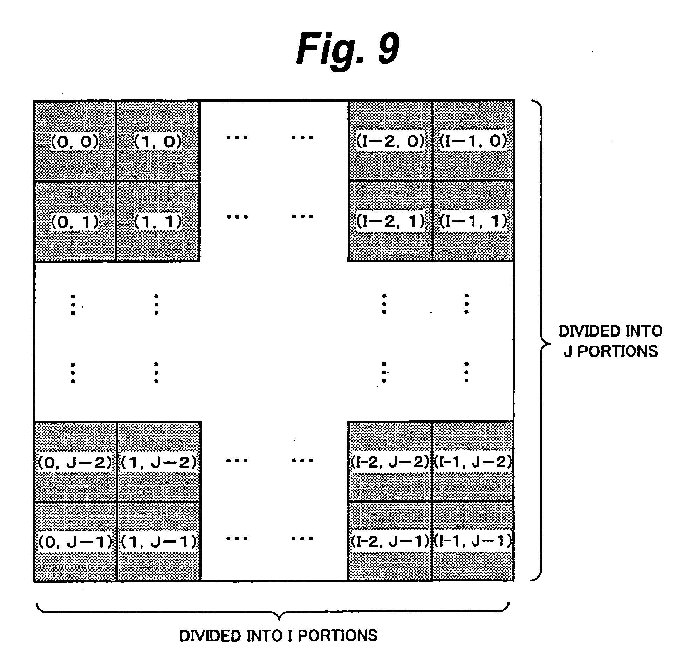

Fig. 9 is a schematic diagram describing blocks according to another embodiment of the present invention; and

Fig. 10 is a schematic diagram showing the two-dimensional relationship of evaluation values and deviations when a moving vector is detected according to the other embodiment of the present invention.

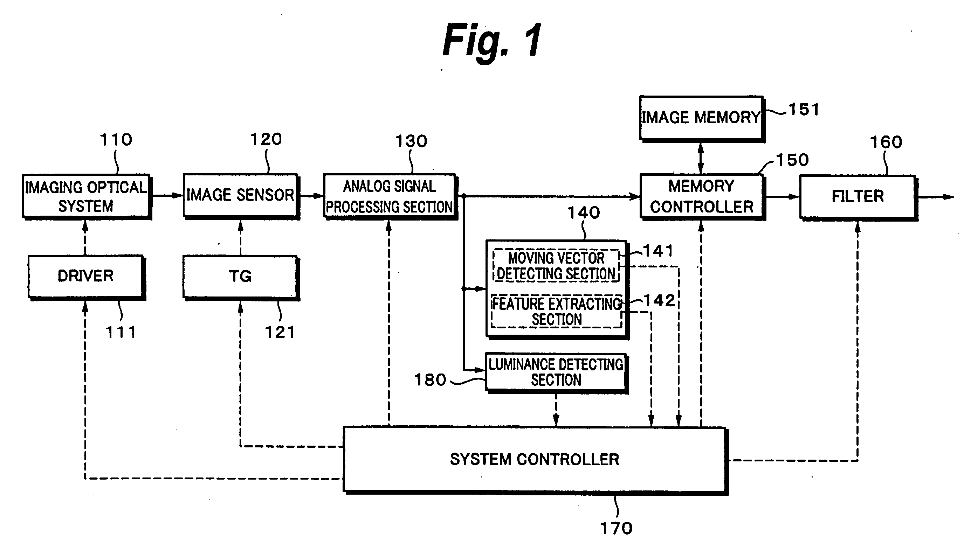

Next, with reference to the accompanying drawings, an embodiment of the present invention will be described. Fig. 1 shows the overall structure of an embodiment of the present invention. In Fig. 1, reference numeral 110 denotes an imaging optical system. The imaging optical system 110 includes a zoom lens which enlarges and reduces the size of an image captured from an object, a focus lens which adjusts a focus distance, an iris (diaphragm) which adjusts the amount of light, an Neutral Density (ND) filter, and a driving circuit which drives these lenses and iris. The zoom lens, the focus lens, the iris, and the ND filter are driven by a driver 111.

Light of an object enters an image sensor 120 which uses a Charge Coupled Device (CCD), a Complementary Metal Oxide Semiconductor (CMOS), or the like through the imaging optical system 110. The image sensor 120 outputs image signals captured corresponding to the light of the object. An example of the imaging apparatus is a digital camera. Instead, the imaging apparatus may be a Personal Digital Assistant (PDA), a mobile phone, or the like. Instead, the imaging apparatus may be a device which captures a moving picture.

The image sensor 120 may be either a primary color type or a complementary color type. The image sensor 120 photo-electrically converts light of an object which enters the imaging optical system 110 into RGB primary color analog signals or complementary color analog signals. A timing generator (abbreviated as TG in Fig. 1) 121 supplies various types of timing signals to the image sensor 120. The image sensor 120 is driven corresponding to the timing signals supplied from the timing generator 121. The timing generator 121 generates various types of timing signals which cause the image sensor 120 to drive.

Image signals are supplied from the image sensor 120 to an analog signal processing section 130 incorporated within an Integrated Circuit (IC). The analog signal processing section 130 sample-holds color signals, controls the gains of the color signals according to Automatic Gain Control (AGC), and converts the analog signals into digital signals. As a result, the analog signal processing section 130 outputs digital image signals.

Digital image signals are supplied from the analog signal processing section 130 to a memory controller 150, a shaking detecting section 140, and a luminance detecting section 180. The shaking detecting section 140 detects the motions of a plurality of captured images and outputs a moving vector as motion information. The shaking detecting section 140 is composed of a moving vector detecting section 141 and a feature extracting section 142. The moving vector detecting section 141 detects a moving vector from time-series digital image signals which are output from the analog signal processing section 130. The feature extracting section 142 extracts feature information from the time-series digital image signals. The feature information is an evaluation value corresponding to the detected moving vector. The luminance detecting section 180 detects the luminance levels of signals which are output from the analog signal processing section 130.

The detected moving vector, the extracted feature information, and the detected luminance level are supplied to a system controller 170. The system controller 170 calculates the reliability of the detected moving vector based on the feature information and the luminance level.

The memory controller 150 controls an image memory 151. The image memory 151 is a memory with which the phases of shaking detection time and compensation time are adjusted. Digital image signals which are output from the analog signal processing section 130 are stored in the image memory 151 through the memory controller 150. The image memory 151 delays the input digital image signals to detect a moving vector. Thereafter, the delayed digital image signals are read from the image memory 151. In addition, the memory controller 150 compensates the digital image signals for shaking on the basis of the amount of shaking compensation designated by the system controller 170.

The digital image signals whose shaking has been compensated by the memory controller 150 are supplied to a filter 160. The filter 160 is a recursive filter including digital circuits. The filter 160 has a memory for one field or one frame. The filter 160 outputs image signals whose S/N ratios have been improved and which have been compensated for shaking. The output image signals are compressed and recorded in a record medium such as a memory card. In addition, the output image signals are displayed on an image display section such as a Liquid Crystal Display (LCD).

The system controller 170 controls the driver 111, the timing generator 121, and the analog signal processing section 130. The moving vector, the feature information, and the luminance level are supplied from the moving vector detecting section 141, the feature extracting section 142, and the luminance detecting section 180 to the system controller 170, respectively. In addition, the system controller 170 controls the memory controller 150 to compensate image signals for shaking, determines the reliability of the moving vector based on the feature amount and the luminance level supplied from the feature extracting section 142 and the luminance detecting section 180, respectively, and controls a filter coefficient of the filter 160 based on the reliability.

In addition, the luminance detecting section 180 generates an Auto Focus (AF) control signal, an auto exposure signal, and an auto white balance signal. These signals are supplied to the system controller 170. The system controller 170 generates a signal which causes the imaging optical system 110 to be controlled. The generated control signal is supplied to the driver 111.

In addition, for the purpose of reducing shaking of an image of an object which enters the image sensor 120, the system controller 170 controls the timing generator 121 to set an electronic shutter speed at as fast as a speed preventing captured images from having an exposure blur. Generally, it is said that a shutter speed which prevents captured images from having an exposure blur is "1 / focal distance" (35 mm equivalent). The focal distance is a value which the system controller 170 obtains for focus control.

In low light intensity condition, the system controller 170 controls an image capturing operation so that a plurality of images are captured at a shutter speed which prevents the captured images from having an exposure blur at predetermined intervals of one field or one frame rather than a slow shutter speed for long time exposure. The number of images captured depends on the luminance of the object. Alternatively, a predetermined number of images may be captured. When the imaging apparatus is a still image camera, a plurality of images captured are the same image unless the object is changed and the camera is shaken. An output image is obtained by shake compensating a plurality of captured images and filtering the compensated images.

The shaking detecting section 140 detects the entire motion of the image plane according to the representative point matching system, which is one of motion detecting methods using block matching operation. This system assumes that objects are nearly the same among frames to be compared. Thus, this system is not suitable when objects are largely different among frames.

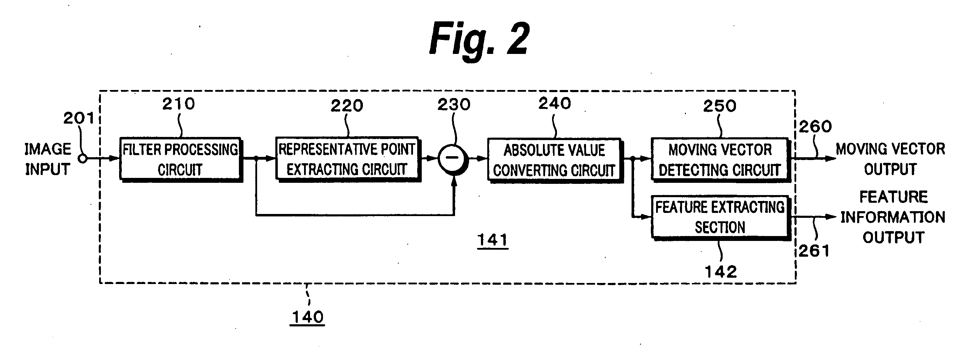

Fig. 2 shows an example of the structure of the shaking detecting section 140. An image input 201 is an input portion for image data whose moving vector is to be detected. Image data which are input from the image input 201 are supplied to a filter processing circuit 210 which removes frequency components which are not necessary to detect motion. An output of the filter processing circuit 210 is supplied to a representative point extracting circuit 220. The representative point extracting circuit 220 extracts pixel data at a predetermined position in each region composed of a plurality of pixels of the input image data (hereinafter the predetermined position is referred to as the representative point) and stores luminance levels of the extracted pixel data.

A subtracting device 230 subtracts the representative point, which is output from the representative point extracting circuit 220, from pixel data, which are output from the filter processing circuit 210. This subtracting process is performed for each region. An absolute value converting circuit 240 calculates the absolute value of a difference signal which is output from the subtracting device 230.

A moving vector detecting circuit 250 detects a moving vector with the absolute value of the difference signal (hereinafter this difference signal is referred to as the residual difference). The moving vector detecting circuit 250 outputs a detected moving vector 260. The moving vector detecting section 141 includes the filter processing circuit 210, the representative point extracting circuit 220, the subtracting device 230, the absolute value converting circuit 240, and the moving vector detecting circuit 250.

An evaluation value of a coordinate position denoted by the moving vector 260 is also supplied to the feature extracting section 142. The feature extracting section 142 outputs an evaluation value corresponding to the detected moving vector 260 as feature information 261.

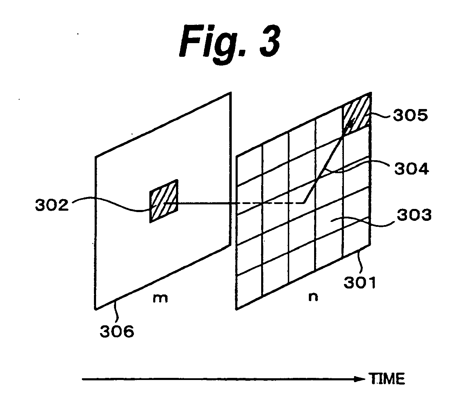

Fig. 3 shows the moving vector detecting method on the representative point matching system. One captured image, for example an image of one frame, is divided into many regions. In Fig. 3, a detection region 301 is a search region from which a moving vector of a frame at time n is detected. In the example shown in Fig. 3, a region of (5 x 5) pixels is designated. In the detection region 301, a pixel which has the strongest correlation in luminance with the representative point is detected as a moving vector. A representative point 302 is designated in a reference region 306 of a frame at time m. The detection region 301 of the frame at time n corresponds, in spatial position, to the reference region 306 of the frame at time m. The representative point 302 is one pixel of an image at time m which is a basis image of comparison. The interval between time n and time m is an interval at which a plurality of images are consecutively captured, for example one field or one frame.

A pixel 303 denotes any one pixel in the detection region 301. Each pixel of the detection region 301 is compared with the representative point 302. A moving vector 304 denotes an example of a detected moving vector. A hatched pixel 305 is present at coordinates which the moving vector indicates.

Many pairs of the reference region 306 and the detection region 301 are designated in each frame. For each pair, the residual difference between the luminance level of the representative point 302 and the luminance level of each pixel of the detection region 301 is calculated. The residual differences at the positions of the (5 x 5) pixels of the detection region 301 are cumulated. As a result, evaluation values of (5 x 5) pixels of one image are calculated. The coordinates at the position of the minimum value in the distribution of the evaluation values is detected as a moving vector.

The luminance level of the representative point at coordinates (u, v) at time m is denoted by km(u, v). The luminance level at coordinates (x, y) at time n is denoted by kn(x, y). In this case, the residual difference calculation formula for detection of a moving vector according to the representative point matching system can be expressed by the following formula (1).

$$P'(x, y) = |k_m(u, v) - k_n(x, y)| \quad \ldots \quad (1)$$

The obtained residual difference is for one pair of the reference region 306 and the detection region 301. The residual differences of many pairs of the entire frame are obtained in the same manner, and the residual differences at coordinates (x, y) are cumulated. As a result, the evaluation values at coordinates (x, y) are obtained. In the example shown in Fig. 3, the evaluation values at 25 (= 5 x 5) pixel positions are generated.

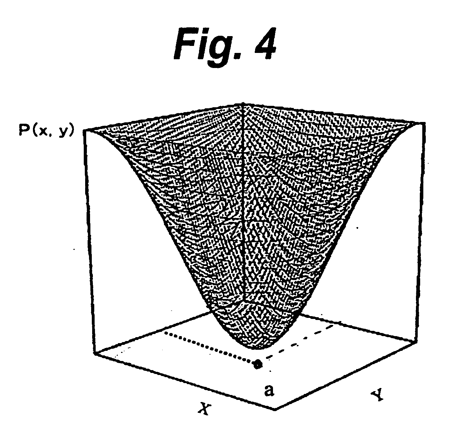

Fig. 4 shows an example of the relationship of deviations and evaluation values. The residual difference between the coordinates at a point "a" whose evaluation value is local minimum and minimum and the coordinates of the representative point becomes a moving vector mv(x, y). When the representative points of the entire image plane of one frame are moved to the position of the coordinates at the point "a", the evaluation value of the coordinates at the point "a" becomes local minimum. This relationship can be expressed by the following formula (2). In formula (2), P(x, y) denotes evaluation values at coordinates (x, y) (namely, a cumulated value of absolute values of residual differences).

$$mv = (x - u, y - v) \text{ for } \min\{P(x, y)\} \quad \ldots \quad (2)$$

When the coordinates of the representative value are (0, 0), the moving vector can be expressed by the following formula (3).

$$mv = (x, y) \text{ for } \min\{P(x, y)\} \quad \ldots \quad (3)$$

The feature extracting section 142 is a circuit which outputs an evaluation value at the point "a" shown in Fig. 4. In other words, the feature extracting section 142 outputs the following formula (4) as feature information L.

$$L = \min\{P(x, y)\} \quad \ldots \quad (4)$$

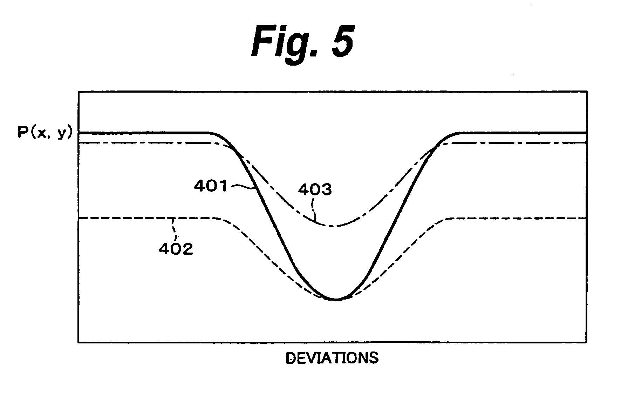

Next, the determination of the reliability of a detected moving vector will be described. Fig. 5 shows the two-dimensional relationship of deviations and evaluation values. The curve in Fig.5 shows variations of evaluation values when the two-dimensional relationship of deviations and evaluation values is viewed from one plane which passes through the point "a", at which the evaluation value is minimum, and is in parallel with one of the x axis and the y axis of Fig. 4.

The local minimum value in deviations is on the coordinate value of the x axis or the y axis of the point "a".

In Fig. 5, a solid line 401 denotes variations of evaluation values when normal shaking takes place. When a moving vector is detected in deviations, the absolute value of the evaluation value at the minimum point is sufficiently small. The correlation of images at other than the minimum point in deviations is small. In this case, it can be determined that the reliability of the detected moving vector be high.

In contrast, it can be determined that the reliability of a moving vector detected on the basis of variations of evaluation values in a low contrast state is low. In Fig. 5, a broken line 402 denotes variations of evaluation values in a low contrast state. When a moving vector is detected in deviations, the absolute value of the evaluation value at the minimum point is sufficiently small. The correlation of images in all deviations is high. However, since the moving vector detected in this case is easily affected by noise, the reliability of the moving vector is low. In the low contrast state, since the difference between the luminance level of the representative point and the luminance level of each pixel in the detection region is generally small, the general evaluation values are small. As a result, since the moving vector is affected by noise, the detection accuracy may deteriorate or a moving vector of other than shaking may be detected. To improve the reliability of a moving vector to be detected, it is necessary to detect the low contrast state and exclude it.

According to this embodiment, with the sum of evaluation values expressed by the following formula (5), it is determined whether the low contrast state takes place. In formula (5), X and Y denote the number of pixels in the horizontal direction of the detection region and the number of pixels in the vertical direction of the detection region, respectively. The sum of evaluation values P(x, y) at coordinates is normalized by the number of pixels (X x Y: it corresponds to the area of the detection region). When the resultant value S is small, it is determined that the contrast of the object is low.

$$S = \frac{\sum_{y=0}^{Y-1} \sum_{x=0}^{X-1} P(x, y)}{X \times Y} \quad \ldots \quad (5)$$

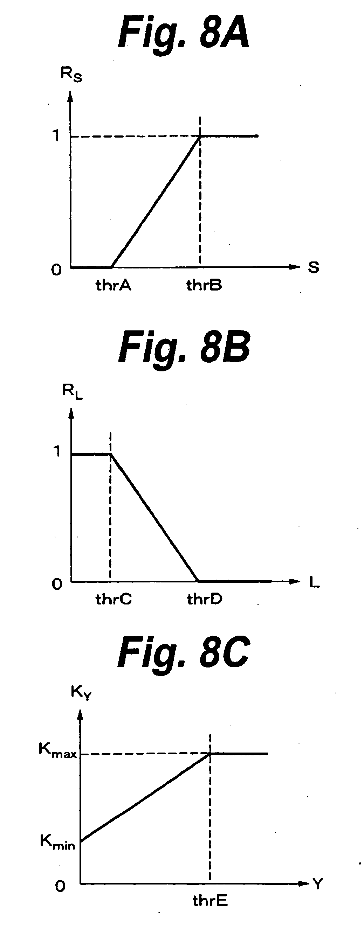

Next, with reference to Fig. 8A, a process of obtaining a reliability index Rs with the value S obtained by formula (5) will be described. When the reliability is low, namely the value S is smaller than a threshold value thrA, the reliability index Rs is set to 0. In contrast, when the reliability is high, namely the value S is larger than a threshold value thrB, the reliability index Rs is set to 1. Otherwise, the reliability Rs is set to a value expressed by the following formula (6) as shown in Fig. 8A.

$$Rs = \frac{S - thrA}{thrB - thrA} \quad \ldots \quad (6)$$

In Fig. 5, a dashed line 403 denotes variations of evaluation values in the case that a plurality of images which are being captured contain a moving object. When a moving vector is detected in deviations, the absolute value of the evaluation value at the minimum point is relatively large. The correlation of images in all the deviations is low. When a moving object takes place, since the correlation of images becomes low, the level of the absolute value of the evaluation value at the minimum point becomes large. Since the correlation of images is low, the reliability of the detected moving vector is low. Thus, it may be impossible to use the detected moving vector for compensation. As a result, with an evaluation value L at the minimum point, the reliability is determined. The evaluation value L at the minimum point can be expressed by formula (7). When the evaluation value L is large, it is determined that a moving object take place.

$$L = \min\{P(x, y)\} \quad \ldots \quad (7)$$

Next, with reference to Fig. 8B, a process of obtaining a reliability index $R_L$ with the value L obtained by formula (7) will be described. When the reliability is high, namely the value L is smaller than a threshold value thrC, the reliability index $R_L$ is set to 1. In contrast, when the reliability is low, namely the value L is larger than a threshold value thrD, the reliability $R_L$ is set to 0. Otherwise, the reliability index $R_L$ is set to a value expressed by the following formula (8) as shown in Fig. 8B.

$$R_L = \frac{L - thrD}{thrC - thrD} \quad \ldots \quad (8)$$

The moving vector detecting section 141 outputs a reliability index R into which the foregoing two reliability indexes Rs and $R_L$ are integrated and a moving vector detected according to formula (9) to the system controller 170. When the reliability index R is low, the reliability of the moving vector is low. In contrast, when the reliability index R is large, the reliability of the moving vector is high. Instead, the moving vector detecting section 141 may supply evaluation values to the system controller 170, and the system controller 170 may calculate the reliability indexes.

$$R = Rs \times RL \quad \ldots \quad (9)$$

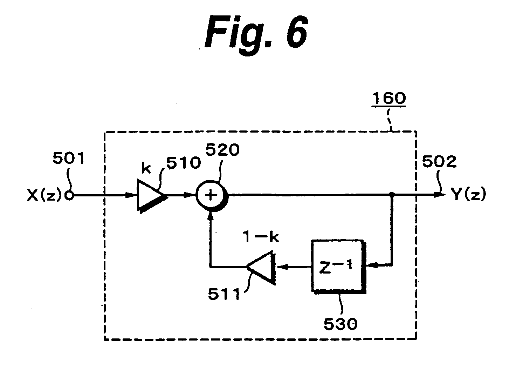

Fig. 6 shows an example of the structure of the filter 160 shown in Fig. 1. Data X(z) 501 which are output from the memory controller 150 are input to the filter 160. An output Y(z) 502 is extracted from an adding device 520 of the filter 160. The level of the input data X(z) 501 is amplified by an amplifier 510 at an amplification factor of k and the amplified data are supplied to an adding device 520. The filter coefficient k (where $0 \leq k \leq 1$) is designated by the system controller 170.

Output data of the adding device 520 are extracted as an output Y(z) and supplied to a delaying device 530. Output data of the delaying device 530 are supplied to the adding device 520 through an amplifier 511. The amplifier 511 amplifies a signal which is output from the delaying device 530 at an amplification factor of (1 - k). The delaying device 530 is a delaying device which delays an output Y(z) 502 by one sample period. One sample period is the difference between the time of the reference region, which contains the representative point, and the time of the detection region. One sample period is for example one field or one frame.

When the filter coefficient k of the filter 160 shown in Fig. 6 is 1 (namely, k = 1), an output component of the preceding time supplied from the amplifier 511 to the adding device 520 is 0. In this case, the input data X(z) 501 are directly extracted as the output data Y(z) 502. When the filter coefficient k of the filter 160 is not 1 (namely, $k \neq 1$), the output component of the preceding time supplied from the amplifier 511 to the adding device 520 is not 0. The adding device 520 adds the output component of the preceding time to the input data X(z) 501. Signal components of different times correlate, whereas random noise components do not correlate. Thus, the adding process of the adding device 520 allows noise components to be decreased.

Next, a filter coefficient Ky will be described. The filter coefficient Ky is calculated corresponding to a signal level Y of the image sensor 120, which is output from the luminance detecting section 180, as shown in Fig. 8C. When the luminance level contains a large noise component, namely the signal level Y is smaller than a threshold value thrE, the filter coefficient Ky can be expressed by formula (10). In contrast, when the luminance level does not contain a large noise component, namely the signal level Y is equal to or larger than the threshold value thrE, the filter coefficient Ky is set to a predetermined filter coefficient Kmax.

$$Ky = \frac{K_{MAX} - K_{MIN}}{thrE} Y + K_{MIN} \quad \ldots \quad (10)$$

The filter coefficient k of the filter 160 shown in Fig. 6 can be calculated with the filter coefficient Ky corresponding to the reliability index R and the luminance level by formula (11). However, only for an initial image, the filter coefficient k is set to 1 so as to cancel a transient response of the filter.

$$k = R \times K_Y \quad \ldots \quad (11)$$

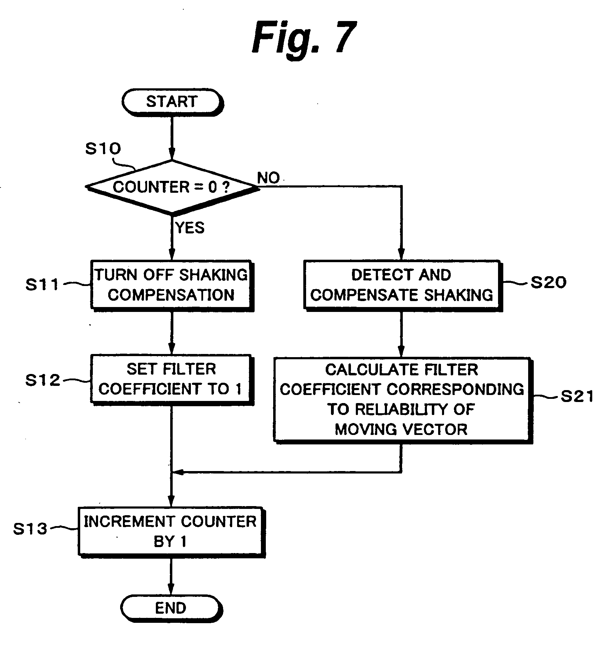

Next, with reference to Fig. 7, a control operation performed by the system controller 170 will be described. The control operation is executed at intervals of which a plurality of images are captured, for example one field or one frame. The number of execution times is indicated as a counter value. In the low light intensity condition, images are consecutively captured at a shutter speed which prevents them from having an exposure blur. A predetermined number of images are compensated for shaking and filtered. After a predetermined number of images have been processed and the counter value has reached a predetermined value, the process is completed and the resultant image is treated as a finally captured image.

At step S10, it is determined whether the counter value (hereinafter simply referred to as the counter) whose value is incremented by 1 whenever the control operation is performed is 0. When the determined result at step S10 is true, namely the counter is 0, the flow advances to step S11. When the determined result at step S10 is false, namely the counter is not 0, the flow advances to step S20.

At step S11, the shaking compensation is turned off. In other words, the memory controller 150 does not compensate an image stored in the image memory 151 for shaking, but directly outputs the image. If the state of which the reliability is low continues, in the initial state of which the counter is 0, an initial image is captured so that a signal compensated for shaking is output.

At step S12, the filter coefficient k of the filter 160 is set to 1. This setting is performed to cancel a transient response of the filter in the initial state. At step S13, the counter is incremented by 1. Thereafter, the process is completed. The process of the next image which is input one field or one frame later begins at step S10.

At step S20, shaking is detected and compensated. In other words, the system controller 170 informs the memory controller 150 of a compensation amount for cancelling a shaking component corresponding to a moving vector detected by the moving vector detecting section 141. The memory controller 150 causes the image memory 151 to output an image which has been compensated for shaking.

At step S21, the coefficient k of the filter is calculated corresponding to the reliability index R and the filter coefficient Ky as expressed by the foregoing formula (11). At step S13, the counter is incremented by 1. Thereafter, the process is completed. The filter coefficient k calculated by the system controller 170 is supplied to the filter 160. The filter coefficient of the filter 160 is set to a proper value.

According to the foregoing embodiment of the present invention, a moving vector is generated for the entire image plane. Instead, the image plane may be divided into a plurality of blocks. A shaking compensation and a filter process may be performed for each of blocks. According to another embodiment of the present invention, a process is performed for each of blocks.

The overall structure of an imaging apparatus according to this embodiment of the present invention is the same as that according to the foregoing embodiment shown in Fig. 1. Thus, reference numerals of structural elements shown in Fig. 1 are used for the description of this embodiment. According to this embodiment, a shaking detecting section 140, which includes a moving vector detecting section 141 and a feature extracting section 142, performs a process for each of (I x J) blocks which are produced by dividing a captured image plane of an image sensor 120 into J portions in the vertical direction and I portions in the horizontal direction. In each block, a plurality of reference regions and a plurality of detection regions are designated. Thus, the shaking compensation operation of the memory controller 150 and the process of the filter 160 are performed for each block. The luminance detecting section 180 detects the luminance level of a signal which is output from the analog signal processing section 130 for each block.

Like the foregoing embodiment, in the low light intensity condition, images are consecutively captured at a shutter speed which prevents them from having an exposure blur and the obtained plurality of images are compensated for shaking and processed by a recursive filter. However, according to this embodiment, the shaking compensation and filter process are performed for each block.

A structure which detects a moving vector according to the representative point system is the same as the structure according to the foregoing embodiment (refer to Fig. 2). As was described with reference to Fig. 3, the absolute value of the residual difference between the luminance level of a representative point in the reference region and the luminance level of each pixel in the detection region 301 is calculated. In this case, when the luminance level of the representative point of coordinates (u, v) of a block (i, j) (where i = 0, 1, 2, ... I - 1, j = 0, 1, 2, ..., J - 1) at time m is denoted by $k_{m,i,j}(x, y)$ and the luminance level of coordinates (x, y) at time n is denoted by $k_{n,i,j}(x, y)$, the residual difference calculation formula for detection of a moving vector according to the representative point matching system can be expressed by the following formula (12).

$$P'_{i,j}(x, y) = |k_{m,i,j}(u, v) - k_{n,i,j}(x, y)| \quad ... \quad (12)$$

The obtained residual difference is for one pair of the reference region 306 and the detection region 301. Likewise, the residual differences are obtained for many pairs of each block. When the residual differences of coordinates (x, y) are cumulated, evaluation values of coordinates (x, y) are obtained. In this embodiment, evaluation values of 25 (= 5 x 5) pixel positions are obtained for each block.

The relationship of deviations and evaluation values shown in Fig. 4 is obtained for each block. The residual difference between the point "a" whose evaluation value is local minimum and minimum and the coordinates of the representative point is a moving vector $mv_{i,j}(x, y)$ of a block (i, j). When the representative point of one block is moved to the point "a", the evaluation value of the point "a" becomes local minimum. The moving vector $mv_{i,j}(x, y)$ of each block can be expressed by the following formula (13). In formula (13), $P_{ij}(x, y)$ denotes an evaluation value of coordinates (x, y) of a block (i, j) (namely, the cumulated value of the absolute values of the residual differences).

$$mv_{i,j} = (x - u, y - v) \text{ for } \min\{P_{i,j}(x, y)\} \quad \ldots \quad (13)$$

When the coordinates of the representative value are (0, 0), a moving vector of a block (i, j) can be expressed by the following formula (14).

$$mv_{i,j} = (x, y) \quad \ldots \quad (14)$$

The feature extracting section 142 is a circuit which outputs an evaluation value corresponding to a moving vector obtained for each block. In other words, the feature extracting section 142 outputs the result of the following formula (15) as feature information of a block (i, j).

$$L_{i,j} = \min\{P_{i,j}(x, y)\} \quad \ldots \quad (15)$$

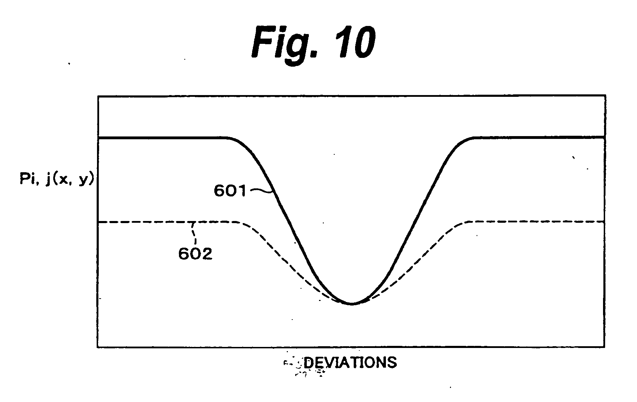

Fig. 10 shows the two-dimensional relationship of deviations and evaluation values of each block. Like the foregoing embodiment (shown in Fig. 5), in Fig. 10, a solid line 601 denotes variations of evaluation values when normal shaking takes place. When a moving vector is detected in deviations, the absolute value of an evaluation value at the minimum point is sufficiently small. In deviations except for the minimum point, the correlation of images is small. In this case, it can be determined that the reliability of the detected moving vector be high.

On the other hand, it is determined that the reliability of a moving vector detected corresponding to variations of evaluation values in the low contrast state is low. In Fig. 10, a broken line 602 denotes variations of evaluation values in the low contrast state. When a moving vector is detected in deviations, the absolute value of the evaluation value at the minimum point is sufficiently small. In all the deviations, the correlation of images is high.

However, since the detected moving vector tends to be easily affected by noise, the reliability of the moving vector is low. In the low contrast state, since the difference between the luminance level of the representative point and the luminance level of each pixel of the detection region becomes generally small, the general evaluation values become small. As a result, since the moving vector is affected by noise or the like, there is a possibility of which the detection accuracy deteriorates and a moving vector of other than shaking may be detected. Thus, to enhance the reliability of the moving vector to be detected, it is necessary to detect the low contrast state and exclude it.

According to this embodiment, it is determined whether the contrast of the object is low with the sum $S_{i,j}$ of evaluation values of each block expressed by formula (16). In formula (16), X and Y denote the number of pixels in the horizontal direction and the number of pixels in the vertical direction of the detection region, respectively. The value $S_{i,j}$ is obtained by normalizing the sum of evaluation values $P_{i,j}(x, y)$ at coordinates by the number of pixels (X x Y: it corresponds to the area of the detection region). When the value $S_{i,j}$ is small, it is determined that the contrast of the object is low.

$$S_{i,j} = \frac{\sum_{y=0}^{Y-1}\sum_{x=0}^{X-1} P_{i,j}(x,y)}{X \times Y} \quad \ldots \quad (16)$$

Like the foregoing embodiment, when the value $S_{i,j}$ of a block (i, j) obtained by formula (16) is smaller than a threshold value thrA, the reliability index $Rs_{i,j}$ is set to 0. When the reliability index $Rs_{i,j}$ is high, namely, the value $S_{i,j}$ is larger than a threshold value thrB, the reliability index $Rs_{i,j}$ is set to 1. Otherwise, the reliability index $Rs_{i,j}$ is set to a value expressed by the following formula (17).

$$Rs_{i,j} = \frac{S_{i,j} - thrA}{thrB - thrA} \quad \ldots \quad (17)$$

A moving vector of each block which is output from the moving vector detecting section 141 may contain a component of a moving object other than a shaking component. To reduce malfunction due to a moving object, it is necessary to extract only a shaking component and cause the memory controller 150 to compensate for shaking corresponding to the moving vector. In addition to the compensation for shaking, it is necessary to detect a component other than shaking from the moving vector and calculate the reliability index $R_{Li,j}$ so that the filter 160 does not integrate the component.

The shaking component can be expressed by formula (18). In formula (18), MD denotes a median filter. The system controller 170 causes the memory controller 150 to compensate the shaking component $mv_{MD}$.

$$mv_{MD} = (MD\{x_{i,j}\}, MD\{y_{i,j}\}) \quad \dots \quad (18)$$

Next, the detection and reliability of a moving object will be described. The extent to which the relevant block contains a moving object is determined as a degree of deviation between a moving vector component and a shaking component. The degree of deviation $L_{i,m}$ can be expressed by formula (19). When the degree of deviation $L_{i,j}$ is large, it is determined that a moving object take place.

$$L_{i,j} = |mv_{i,j} - mv_{MD}| \quad \dots \quad (19)$$

In this case, the reliability index $R_{Li,j}$ of a block (i, j) is calculated with the degree of deviation $L_{i,j}$ as shown in Fig. 8B in the same manner as the foregoing embodiment. When the reliability index $R_{Li,j}$ is high, namely the degree of deviation $L_{i,j}$ is smaller than a threshold value thrC, the reliability index $R_{Li,j}$ is set to 1. When the reliability index $R_{Li,j}$ is low, namely the degree of deviation $L_{i,j}$ is larger than a threshold value thrD, the reliability index $RL_{i,j}$ is set to 0. Otherwise, the reliability index $R_{Li,j}$ is set to a value expressed by formula (20).

$$R_{Li,j} = \frac{L_{i,j} - thrD}{thrC - thrD} \quad \dots \quad (20)$$

When the reliability of a moving vector of each block (i, j) which is detected by the moving vector detecting section 141 is denoted by $R_{i,j}$, the reliability index $R_{i,j}$ can be expressed by formula (21). When the reliability index $R_{i,j}$ is low, the reliability of the moving vector is low. In contrast, when the reliability index $R_{i,j}$ is large, the reliability of the moving vector is high.

$$R_{i,j} = R_{si,j} \times R_{Li,j} \quad \dots \quad (21)$$

The filter to which each block of an image which has been compensated for shaking has the same structure as that of the foregoing embodiment shown in Fig. 6. However, in this embodiment, the filter coefficient is set for each block. A filter coefficient of each block is denoted by $k_{i,j}$ (where $0 \leq k_{i,j} \leq 1$).

Next, a filter coefficient $K_{yi,j}$ of a block (i, j) will be described. Like the foregoing embodiment, the filter coefficient $K_{yi,j}$ is calculated with the signal level $Y_{i,j}$ of the image sensor 120, which is output from the luminance detecting section 180, as shown in Fig. 8C. When the luminance level contains a large noise component, namely the signal level $Y_{i,j}$ is smaller than a threshold value thrE, the filter coefficient $Ky_{i,j}$ can be expressed by formula (22). In contrast, when the luminance level does not contain a large noise component, namely the signal level $Y_{i,j}$ is equal to or larger than a threshold value thrE, the filter coefficient $Ky_{i,j}$ is set to a predetermined filter coefficient $K_{max}$.

$$K_{Yi,j} = \frac{K_{MAX} - K_{MIN}}{thrE} Y_{i,j} + K_{MIN} \quad \dots \quad (22)$$

Like the foregoing embodiment, the filter coefficient $k_{i,j}$ is calculated with the filter coefficient index $Ky_{i,j}$ corresponding to the reliability index R and the luminance level by formula (23). However, only for an initial image, the filter coefficient k is set to 1 so as to cancel a transient response of the filter.

$$K_{i,j} = R_{i,j} \times K_{Yi,j} \quad \ldots \quad (23)$$

According to this embodiment, the control operation of the system controller 170 is performed as shown in Fig. 7 in the same manner as the foregoing embodiment. However, according to the foregoing embodiment, the control operation is performed for each field or each frame. In contrast, according to this embodiment, it is necessary to perform the control operation for each block. After all blocks of a predetermined number of images have been processed and the counter value has reached a predetermined value, the process is completed. The resultant image is treated as a finally captured image.

According to this embodiment of the present invention, since each of a plurality of blocks is controlled rather than each frame or each field unlike the foregoing embodiment, the filter coefficient can be controlled corresponding to a local feature of an image. Thus, according to this embodiment of the present invention, the picture quality can be more improved than the picture quality of the foregoing embodiment.

It should be understood by those skilled in the art that various modifications, combinations, subcombinations and alternations may occur depending on design requirements and other factors insofar as they are within the scope of the appended claims or the equivalents thereof. For example, a moving vector may be detected by other than the representative point system.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1.   An imaging method, comprising the steps of:

capturing a plurality of images which chronologically differ;
detecting motion of the plurality of images and generating motion information;
determining reliability of the motion information;
compensating shaking (S20) which takes place among the plurality of images corresponding to the motion information; and
filtering an image which has been compensated for shaking by using a recursive filter,
wherein a filter coefficient of the filter process is varied corresponding to the reliability of the motion information (S21).

2.   The imaging method as set forth in claim 1,
wherein the capturing step is performed by capturing each of the plurality of images with a shutter speed that prevents an exposure blur from taking place.

3.   The imaging method as set forth in claim 1,
wherein the shaking compensating step is performed for said plurality of images other than an image which is captured first in the plurality of images.

4.   The imaging method as set forth in claim 1,
wherein the filter coefficient of the recursive filter is changed for an image which is captured first in the plurality of images.

5.   The imaging method as set forth in claim 1,
Wherein, in the reliability determining step; the reliability of the motion information obtained from an image captured from a low contrast object is determined to be low.

6.   The imaging method as set forth in claim 1,
Wherein, in the reliability determining step, the reliability of the motion information obtained from the plurality of images is determined to be low when the plurality of images comprises a moving object.

**7.** The imaging method as set forth in claim 1,
wherein each of the captured images is divided into a plurality of blocks, and
wherein the motion detecting step, the reliability determining step, the shaking compensating step, the filtering step, and the process of varying the filter coefficient of the filtering process are performed for each of the plurality of blocks.

**8.** An imaging apparatus, comprising:

image capturing means (110, 120) for capturing a plurality of images which chronologically differ;
motion detecting means (141, 250) for detecting motion of the plurality of images and generating motion information;
reliability determining means (170) for determining reliability of the motion information;
shaking compensating means (150) for compensating shaking which takes place among the plurality of images corresponding to the motion information; and
filtering means (160) for filtering an image which has been compensated for shaking by using a recursive filter, wherein a filter coefficient of the filtering means is varied corresponding to the reliability of the motion information.

**Patentansprüche**

**1.** Bildgebungsverfahren, welches folgende Schritte umfasst:

Einfangen mehrerer Bilder, welche sich chronologisch unterscheiden;
Erfassung von Bewegung der mehreren Bilder und Erzeugung von Bewegungsinformation;
Bestimmen von Verlässlichkeit der Bewegungsinformation;
Kompensieren einer Erschütterung (S20), welche unter den mehreren Bildern stattfindet, entsprechend der Bewegungsinformation; und
Filtern eines Bilds, welches unter Verwendung eines Rekursiv-Filters auf Erschütterung kompensiert wurde, wobei ein Filterkoeffizient des Filterprozesses entsprechend der Verlässlichkeit der Bewegungsinformation (S21) variiert wird.

**2.** Bildgebungsverfahren nach Anspruch 1,
wobei der Einfangschritt durch Einfangen jedes der mehreren Bilder mit einer Verschlussgeschwindigkeit durchgeführt wird, welche verhindert, dass eine Belichtungs-Unschärfe stattfindet.

**3.** Bildgebungsverfahren nach Anspruch 1,
wobei der Erschütterungskompensationsschritt für die mehreren Bilder abgesehen von einem Bild, welches zuerst in den mehreren Bildern eingefangen wird, durchgeführt wird.

**4.** Bildgebungsverfahren nach Anspruch 1,
wobei der Filterkoeffizient des Rekursiv-Filters für ein Bild geändert wird, welches zuerst in den mehreren Bildern eingefangen wird.

**5.** Bildgebungsverfahren nach Anspruch 1,
wobei im Verlässlichkeitsbestimmungsschritt die Verlässlichkeit der Bewegungsinformation, welche von einem Bild erlangt wird, welches von einem Objekt mit niedrigem Kontrast eingefangen wird, als niedrig bestimmt wird.

**6.** Bildgebungsverfahren nach Anspruch 1,
wobei im Verlässlichkeitsbestimmungsschritt die Verlässlichkeit der Bewegungsinformation, welche von den mehreren Bildern erlangt wird, als niedrig bestimmt wird, wenn die mehreren Bilder ein sich bewegendes Objekt aufweisen.

**7.** Bildgebungsverfahren nach Anspruch 1,
wobei jedes der eingefangenen Bilder in mehrere Blöcke unterteilt wird, und
wobei der Bewegungserfassungsschritt, der Verlässlichkeitsbestimmungsschritt, der Erschütterungskompensationsschritt, der Filterungsschritt und der Prozess zum Variieren des Filterkoeffizienten des Filterungsverfahrens für jeden der mehreren Blöcke durchgerührt wird.

**8.** Bildgebungsverfahren, welche umfasst:

eine Bildgebungseinrichtung (110, 120) zum Einfangen mehrerer Bilder, welche sich chronologisch unterscheiden;

eine Bewegungserfassungseinrichtung (141,250) zum Erfassen von Bewegung der mehreren Bilder und zum Erzeugen von Bewegungsinformation;

eine Verlässlichkeitsbestimmungseinrichtung (170) zum Bestimmen der Verlässlichkeit der Bewegungsinformation;

eine Erschüttezungskompensationseinrichtung (150) zum Kompensieren einer Erschütterung, welche unter den mehreren Bildern stattfindet, entsprechend der Bewegungsinformation; und

eine Filterungseinrichtung (160) zum Filtern eines Bilds, welches auf Erschütterung unter Verwendung eines Rekursiv-Filters kompensiert wurde,

wobei ein Filterkoeffizient der Filterungseinrichtung entsprechend der Verlässlichkeit der Bewegungsinformation variiert wird.

## Revendications

1. Procédé de formation d'image, comprenant les étapes consistant à :

capturer une pluralité d'images qui diffèrent chronologiquement ;
détecter un mouvement de la pluralité d'images et générer des informations de mouvement ;
déterminer la fiabilité des informations de mouvement ;
compenser un tremblement (S20) qui apparaît parmi la pluralité d'images correspondant aux informations de mouvement ; et
filtrer une image qui a fait l'objet de la compensation de tremblement en utilisant un filtre récursif,
dans lequel un coefficient de filtre du processus de filtrage est modifié en fonction de la fiabilité des informations de mouvement (S21).

2. Procédé de formation d'image selon la revendication 1, dans lequel l'étape de capture est effectuée en capturant chacune de la pluralité d'images avec une vitesse d'obturateur qui évite l'apparition d'un flou d'exposition.

3. Procédé de formation d'image selon la revendication 1, dans lequel l'étape de compensation de tremblement est effectuée pour ladite pluralité d'images autres qu'une image qui est capturée en premier dans la pluralité d'images.

4. Procédé de formation d'image selon la revendication 1, dans lequel le coefficient de filtre du filtre récursif est modifié pour une image qui est capturée en premier dans la pluralité d'images.

5. Procédé de formation d'image selon la revendication 1, dans lequel, à l'étape de détermination de fiabilité, la fiabilité des informations de mouvement obtenues à partir d'une image capturée d'un objet à faible contraste est déterminée comme étant faible.

6. Procédé de formation d'image selon la revendication 1, dans lequel, à l'étape de détermination de fiabilité, la fiabilité des informations de mouvement obtenues à partir de la pluralité d'images est déterminée comme étant faible lorsque la pluralité d'images comprennent un objet en mouvement.

7. Procédé de formation d'image selon la revendication 1,
dans lequel chacune des images capturées est divisée en une pluralité de blocs, et
dans lequel l'étape de détection de mouvement, l'étape de détermination de fiabilité, l'étape de compensation de tremblement, l'étape de filtrage et le processus de modification du coefficient de filtre du processus de filtrage sont effectués pour chacun de la pluralité de blocs.

8. Appareil de formation d'image, comprenant :

des moyens de capture d'image (110, 120) pour capturer une pluralité d'images qui diffèrent chronologiquement ;
des moyens de détection de mouvement (141, 250) pour détecter un mouvement de la pluralité d'images et générer des informations de mouvement ;
des moyens de détermination de fiabilité (170) pour déterminer la fiabilité des informations de mouvement ;
des moyens de compensation de tremblement (150) pour compenser un tremblement qui apparaît parmi la pluralité d'images en fonction des informations de mouvement ; et

des moyens de filtrage (160) pour filtrer une image qui a fait l'objet de la compensation de tremblement en utilisant un filtre récursif,

dans lequel un coefficient de filtre des moyens de filtrage est modifié en fonction de la fiabilité des informations de mouvement.

# Fig. 1

# Fig. 2

IMAGE INPUT 201 → **FILTER PROCESSING CIRCUIT** (210) → **REPRESENTATIVE POINT EXTRACTING CIRCUIT** (220) → (−) (230) → **ABSOLUTE VALUE CONVERTING CIRCUIT** (240) → **MOVING VECTOR DETECTING CIRCUIT** (250) → 260 MOVING VECTOR OUTPUT

→ **FEATURE EXTRACTING SECTION** (142) → 261 FEATURE INFORMATION OUTPUT

141

140

EP 1 765 005 B1

# Fig. 3

Fig. 4

# Fig. 5

# Fig. 6

## Fig. 7

```
              ┌─────────┐
              │  START  │
              └─────────┘
                   │
   S10             ▼
        ◇ COUNTER = 0 ? ◇──── NO ──────────────┐
              │                                 │
             YES                                │
              ▼                                 ▼
   S11  ┌──────────────┐        S20  ┌────────────────────┐
        │ TURN OFF     │             │ DETECT AND         │
        │ SHAKING      │             │ COMPENSATE SHAKING │
        │ COMPENSATION │             └────────────────────┘
        └──────────────┘                        │
              │                                  ▼
              ▼                   S21  ┌──────────────────────────┐
   S12  ┌──────────────┐               │ CALCULATE FILTER         │
        │ SET FILTER   │               │ COEFFICIENT CORRESPONDING│
        │ COEFFICIENT  │               │ TO RELIABILITY OF        │
        │ TO 1         │               │ MOVING VECTOR            │
        └──────────────┘               └──────────────────────────┘
              │                                  │
              ◄──────────────────────────────────┘
              ▼
   S13  ┌──────────────────┐
        │ INCREMENT COUNTER│
        │ BY 1             │
        └──────────────────┘
              │
              ▼
          ┌───────┐
          │  END  │
          └───────┘
```

# Fig. 8A

# Fig. 8B

# Fig. 8C

# Fig. 9

(0, 0)　(1, 0)　・・・　・・・　(I−2, 0)　(I−1, 0)

(0, 1)　(1, 1)　・・・　・・・　(I−2, 1)　(I−1, 1)

⋮　⋮　　⋮　⋮

⋮　⋮　　⋮　⋮

(0, J−2)　(1, J−2)　・・・　・・・　(I-2, J−2)　(I-1, J−2)

(0, J−1)　(1, J−1)　・・・　・・・　(I-2, J−1)　(I-1, J−1)

DIVIDED INTO
J PORTIONS

DIVIDED INTO I PORTIONS

# Fig. 10

**EP 1 765 005 B1**

**REFERENCES CITED IN THE DESCRIPTION**

**Patent documents cited in the description**

- JP 2005269632 A
- JP 9261526 A
- JP 11075105 A
- US 5748231 A
- WO 03073750 A1